(19) Europäisches Patentamt
European Patent Office
Office européen des brevets

(11) **EP 1 911 422 A1**

(12) **EUROPEAN PATENT APPLICATION**

(43) Date of publication:
**16.04.2008 Bulletin 2008/16**

(51) Int Cl.:
*A61F 2/68* (2006.01)      *F16D 55/00* (2006.01)

(21) Application number: **06021377.4**

(22) Date of filing: **12.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **UNIVERSITEIT TWENTE**
**7522 NB  Enschede (NL)**

(72) Inventors:
• **Hekman, Edsko Evert Geert**
**7534 CH Enschede (NL)**

• **Stienen, Adrianus Hubertus Arno**
**7523 GR Enschede (NL)**
• **Van der Kooij, Herman**
**3514 AL Utrecht (NL)**

(74) Representative: **'t Jong, Bastiaan Jacob et al**
**Arnold & Siedsma**
**Sweelinckplein 1**
**2517 GK Den Haag (NL)**

(54) **Friction force control device**

(57) The invention relates to a device for providing a controlled friction on a rotation shaft rotatably arranged on a base, which device comprises:
- a friction generating device having a rotatable part connected to the shaft and a stationary part connected to the base;
- a pressure sensor arranged between the stationary part and the base in order to measure the counter-force; and
- control means for controlling the friction generating device based on the pressure measured by the pressure sensor.

FIG. 2

## Description

The invention relates to a device for providing a controlled friction on a rotation shaft rotatably arranged on a base.

Friction devices are well known, for example as disc brakes or electromagnetic brakes. With these friction devices it is difficult to determine the exact amount of friction applied to a rotation shaft. Friction depends on the state of the contact surface between for example a brake pad and a disc. By pressing the brake pad against the disc, a certain amount of friction is achieved. When the surface of the disc is a little greasy a low friction force is achieved while if the disc is rusty, a high friction force will be achieved.

In medical applications, in particular for ortheses, it is mandatory that the achieved friction in a rotating point of the orthesis is controllable. The desired friction is furthermore small in comparison to other applications of disc brakes and therefore difficult to control.

It is therefore an object of the invention to provide a device according to the preamble, with which the friction force can be better controlled.

This object is achieved by a device according to the invention, which device comprises:

- a friction generating device having a rotatable part connected to the shaft and a stationary part connected to the base;
- a pressure sensor arranged between the stationary part and the base in order to measure the counterforce; and
- control means for controlling the friction generating device based on the pressure measured by the pressure sensor.

By providing a pressure sensor between the stationary part and the base it is possible to measure the reaction force generated by the friction force. This reaction force is directly related to the friction force and can be used to control the friction generating device.

In a preferred embodiment of the device according to the invention, the device comprises an angle sensor for measuring the rotation angle between the shaft and the base. With this angle sensor it is possible to detect whether the shaft rotates and, if so, at which speed the shaft rotates. Only by rotation a maximum friction force is achieved and such a value can be used for controlling the friction generating device. On the other hand the angle sensor can also be used in for example an orthesis to control the friction device such, that the generated friction is dependent on the angle and/or derivatives thereof. With such an embodiment it is possible to generate a friction profile depending on the angle of the shaft. It would also be possible to program the friction such that an exercise program can be followed with an orthesis.

In another embodiment of the device according to the invention, the friction generating device comprises an electro magnetic brake.

In a preferred embodiment of the device according to the invention, the friction generating device comprises a friction brake. Such a friction brake is robust and can be embodied relatively light, which is of advantage when used in the medical field.

In a further preferred embodiment of the device according to the invention, the friction brake comprises a disc arranged on the shaft and at least one friction pad urgable towards the disc.

A very preferred embodiment is a device according to the invention wherein the friction brake is a hydraulic friction brake having a hydraulic working cylinder, the device further comprising:

- a hydraulic control cylinder in fluid communication with the working cylinder;
- a first spring arranged to the piston of the control cylinder; and
- an actuator for tensioning the first spring; wherein the actuator is controlled by the control means.

With a hydraulic brake it is possible to split the friction generating device in two parts, such that the weight of the part directly coupled to the shaft can be kept low. With a hydraulic friction brake, the control cylinder and the actuator can be placed at a distance and the working cylinder and control cylinder are only coupled through a hydraulic line. The actuator is used for tensioning the spring, which enables a linear build up of the hydraulic pressure and therefor a linear build up of the friction force.

In a further preferred embodiment the device comprises a second spring arranged to the actuator to counter act the first spring such that spring energy can be exchanged between the first spring and the second spring.

Preferably the actuator is a stepper motor. Such a stepper motor can easily be controlled and displacement of the spring is easily achieved.

The invention further relates to an orthesis for supporting a joint, such as a shoulder, knee or elbow, wherein the orthesis comprises a device according to the invention.

These and other advantages of the invention will be elucidated in conjunction with the accompanying drawings.

Figure 1 shows a perspective view of a training device in which an orthesis according to the invention is used.

Figure 2 shows in a schematic and perspective view a device according to the invention as used in the training device according to figure 1.

Figure 3 shows a schematic view of the device according to figure 2.

Figure 4 shows a second embodiment of a device according to the invention, and

Figure 5 shows an optimized arrangement of the embodiment according to figure 4.

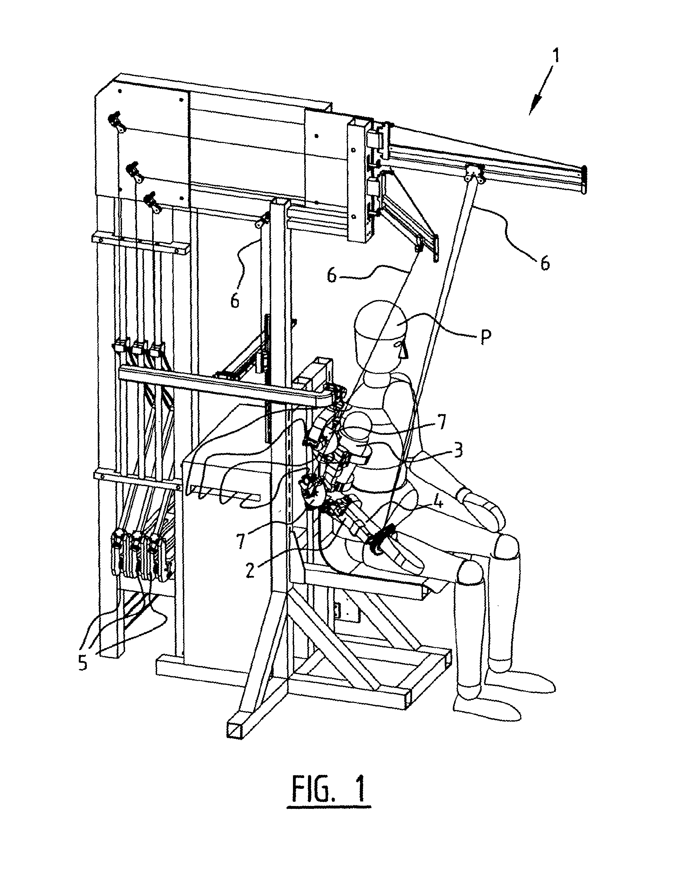

Figure 1 shows a training device 1 in which an orthesis 2 according to the invention is used. This orthesis 2 is strapped around the upper arm 3 and the fore-arm 4 of a person P. The weight of the orthesis 2 is compensated by spring devices 5, which are connected through cables 6 to the orthesis 2.

At each rotation axis of the orthesis 2 a device 7 according to the invention is arranged.

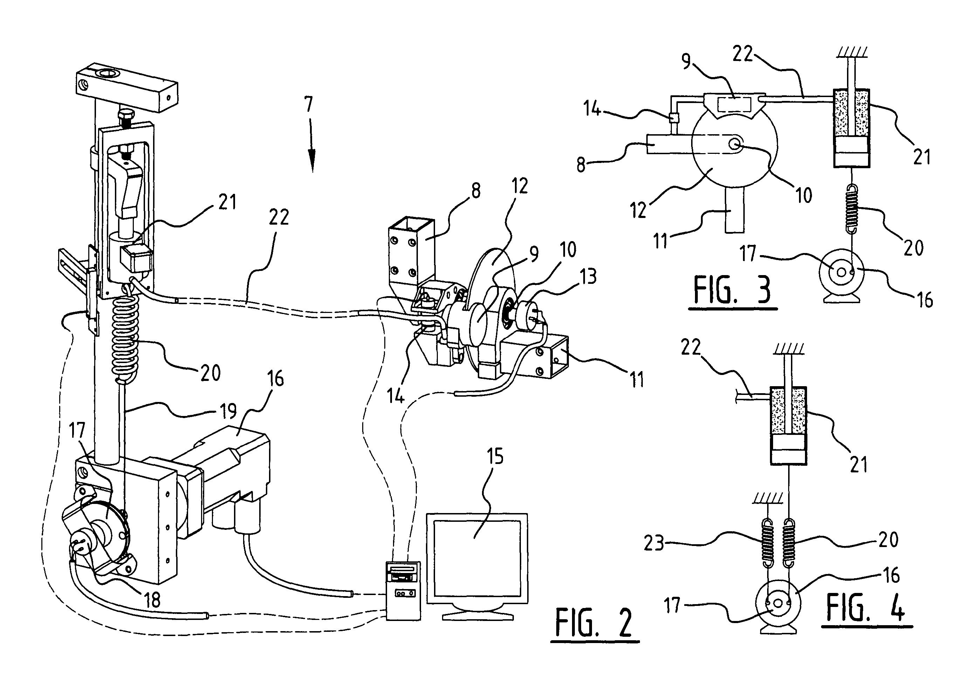

In figure 2 the device 7 according to the invention is shown in more detail. The device 7 has a base 8 on which the brake caliper is arranged. Furthermore a shaft 10 is arranged on the base 8 around which a part 11 is rotatably arranged. The part 11 also comprises a disc 12 around which the caliper 9 is arranged. On the shaft 10 an angle sensor 13 is furthermore arranged for detecting the angle of the disc 12 relative to the shaft 10.

Between the stationairy part 8 and the caliper 9 is a pressure sensor 14 arranged, which measures the reaction force. The measurements of the pressure sensor 14 and the angle sensor 13 are fed to a control device 15, such as a personal computer.

The personal computer 15 controls a synchronous motor 16 on which a pulley 17 is arranged. On the shaft of the motor 16 an angle sensor 18 is arranged which provides feedback to the control device 15. Around the pulley 17 a cable 19 is wound through which the motor 16 can tension the spring 20. The spring 20 is coupled to a hydraulic control cylinder 21, which provides the caliper 9 with hydraulic pressure through the hydraulic line 22.

In figure 3 the device 7 is schematically shown. The same reference numerals are used for the same part of the device.

When a certain amount of friction is desired on the shaft 10, the control device 15 will actuate the motor 16, such that the spring 20 is tensioned. This will provide a hydraulic pressure to the caliper 9. The caliper 9 will induce a friction force on the disc 12 and as a result a reaction force will be generated which is measured by the pressure sensor 14. Depending on the measurements of the pressure sensor, the motor 16 is further controlled by the control device 15.

In figure 4 a further embodiment is shown for the control cylinder 21 and the motor 16. An additional spring 23 is arranged at the opposite side of the pulley 17. By providing a pretension in both springs 20, 23, it is possible to already provide an average pressure in the hydraulic line 22. The motor 16 only has to provide power for the pressure differences relative to the average pressure. As a result the size of the motor 16 can be reduced.

The arrangement with two springs 20, 23 can be optimized, such that spring energy from one spring can be transferred to the other spring without virtually no additional energy. This has the advantage that a smaller motor can be used and that the spring force, acting on the control cylinder can be adjusted more rapidly.

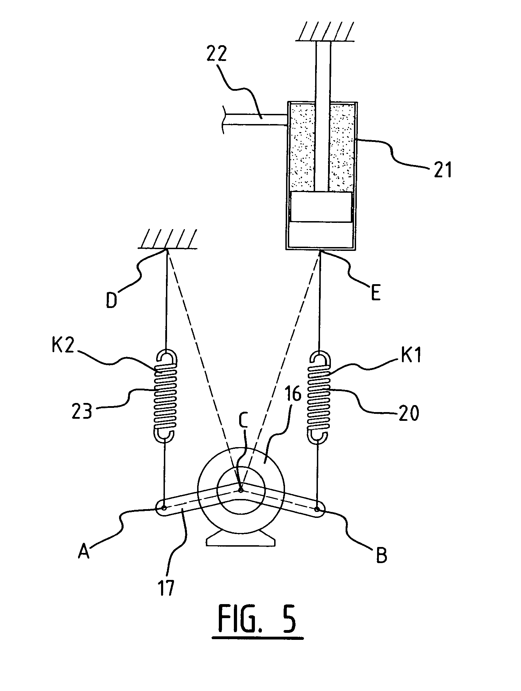

In order to achieve such an arrangement the following three conditions must be met. First of all both springs should be "ideal springs", i.e. springs which have a spring force of 0N at a zero length. Secondly the angles $\beta$ and $\gamma$ should add up to 180° (see figure 5). Thirdly the following equation should be met:

$$(AC \times DC) \times K1 = (BC \times EC) \times K2,$$

wherein K1 and K2 are the spring constants of springs 20, 23 respectively.

## Claims

1.    Device for providing a controlled friction on a rotation shaft rotatably arranged on a base, which device comprises:

   - a friction generating device having a rotatable part connected to the shaft and a stationary part connected to the base;
   - a pressure sensor arranged between the stationary part and the base in order to measure the counter-force; and
   - control means for controlling the friction generating device based on the pressure measured by the pressure sensor.

2.    Device according to claim 1, comprising an angle sensor for measuring the rotation angle by the control means between the shaft and the base.

3.    Device according to claim 1 or 2, wherein the friction generating device comprises an electromagnetic brake.

4.    Device according to claim 1 or 2, wherein the friction generating device comprises a friction brake.

5.    Device according to claim 4, wherein the friction brake comprises a disc arranged on the shaft and at least one friction pad urgable towards the disc.

6.    Device according to claim 4 or 5, wherein the friction brake is an hydraulic friction brake having a hydraulic working cylinder, the device further comprising:

   - a hydraulic control cylinder in fluid communication with the working cylinder;
   - a first spring arranged to the piston of the control cylinder; and
   - an actuator for tensioning the first spring; wherein the actuator is controlled by the control means.

**7.** Device according to claim 6, comprising a second spring arranged to the actuator to counter act the first spring such that spring energy can be exchanged between the first spring and the second spring.

**8.** Device according to claim 6 or 7, wherein the actuator is a stepper motor.

**9.** Orthesis for supporting a joint, such as a shoulder, knee or elbow, wherein the orthesis comprises a device according to any of the preceding claims.

FIG. 1

FIG. 3

FIG. 4

FIG. 2

## FIG. 5

European Patent Office

**EUROPEAN SEARCH REPORT**

Application Number

EP 06 02 1377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 43 278 A1 (BOSCH GMBH ROBERT) 2 March 1972 (1972-03-02) | 1,4,5 | INV. A61F2/68 F16D55/00 |
| A | * page 3, last paragraph - page 4, paragraph 2; figure 1 * | 6 | |
| X | DE 36 00 647 A1 (TEVES GMBH ALFRED [DE]) 16 July 1987 (1987-07-16) * column 4, line 39 - column 6, line 37; figure 1 * | 1,2,4-6 | |
| A | WO 2004/092606 A2 (VICTHOM HUMAN BIONICS INC [CA]; DUPUIS DANIEL [CA]; BEDARD STEPHANE [C] 28 October 2004 (2004-10-28) * paragraph [0002] - paragraph [0006] * | 1,3 | |
| A | US 5 462 137 A (AUBRY JACQUES A [FR] ET AL) 31 October 1995 (1995-10-31) * abstract; figure 1 * | 6 | |
| A | EP 0 317 182 A2 (LUCAS IND PLC [GB]) 24 May 1989 (1989-05-24) * abstract; figure * | 8 | TECHNICAL FIELDS SEARCHED (IPC) A61F B60T F16D G01L |
| A | US 2 533 008 A (HANSON ARNOLD B) 5 December 1950 (1950-12-05) * figure 2 * | 9 | |

The present search report has been drawn up for all claims

| Place of search | Date of completion of the search | Examiner |
|---|---|---|
| Berlin | 5 April 2007 | Junk, Michael |

**ANNEX TO THE EUROPEAN SEARCH REPORT
ON EUROPEAN PATENT APPLICATION NO.**                    EP 06 02 1377

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2007

| Patent document cited in search report | | Publication date | Patent family member(s) | | Publication date |
|---|---|---|---|---|---|
| DE 2043278 | A1 | 02-03-1972 | NONE | | |
| DE 3600647 | A1 | 16-07-1987 | NONE | | |
| WO 2004092606 | A2 | 28-10-2004 | AU | 2004231134 A1 | 28-10-2004 |
| | | | CA | 2519502 A1 | 28-10-2004 |
| | | | CN | 1774583 A | 17-05-2006 |
| | | | EP | 1613872 A2 | 11-01-2006 |
| | | | JP | 2006524303 T | 26-10-2006 |
| | | | KR | 20060008905 A | 27-01-2006 |
| US 5462137 | A | 31-10-1995 | NONE | | |
| EP 0317182 | A2 | 24-05-1989 | US | 4950028 A | 21-08-1990 |
| US 2533008 | A | 05-12-1950 | NONE | | |

EPO FORM P0459

For more details about this annex : see Official Journal of the European Patent Office, No. 12/82